# FASCICULE DE BREVET EUROPEEN

(11) **EP 3 414 470 B1**
(45) Date de publication et mention de la délivrance du brevet: **26.08.2020**
(21) Numéro de dépôt: 17716944.8
(22) Date de dépôt: 15.03.2017
(51) Int. Cl.: F16F 13/10

(54) **CALE AMORTISSANTE HYDRAULIQUE MUNIE DE DISPOSITIFS DE DECOUPLAGE EN BASSES ET HAUTES FRÉQUENCES**
HYDRAULISCHE DÄMPFUNGSEINRICHTUNG MIT NIEDER- UND HOCHFREQUENZENTKOPPLUNGSEINRICHTUNG
HYDRAULIC DAMPING MOUNT WITH LOW AND HIGH FREQUENCY DECOUPLING DEVICE

(30) Priorité: 13.04.2016 FR 1653265
(43) Date de publication de la demande: 19.12.2018
(73) Titulaire: PSA AUTOMOBILES S.A., 78300 Poissy (FR)
(72) Inventeur: SAUVAGE, Olivier, 92800 Puteaux (FR); CHILLON, Jean, 92100 Boulogne Billancourt (FR); ROTA, Laurent, 91530 St Cheron (FR); DIMITRIJEVIC, Zoran, 91570 Bievres (FR)
(86) Numéro de dépôt international: PCT/FR2017/050603
(87) Numéro de publication internationale: WO 2017/178720

(56) Documents cités:
- EP-A1- 1 498 637
- FR-A1- 2 855 225
- US-A- 6 068 246
- US-A1- 2011 001 281

## Description

La présente invention porte sur une cale amortissante hydraulique munie de dispositifs de découplage en basses et hautes fréquences. L'invention trouve une application particulièrement avantageuse, mais non exclusive, dans le domaine de véhicules automobiles.

On connait du document US6068246A une architecture de cale amortissante hydraulique compacte qui, dans une première variante, utilise une seule chambre de travail avec sa colonne propre reliée à une seule une chambre de compensation et qui, dans une deuxième variante, utilise tête-bêche deux chambres de travail, avec chacune leur colonne propre, lesquelles débouchent dans la même chambre de compensation commune.

La cale hydraulique multifréquences décrite dans le document PCT/FR2015/052650 permet entre autres d'obtenir des taux d'amortissement importants pour deux zones fréquentielles, par exemple au voisinage de 10 Hz et de 20 Hz, afin de dissiper les vibrations générées par les modes de suspension du groupe moto-propulseur dits de "hachis" et de "galop". Une telle cale comporte au moins deux colonnes de fluide, dont une débouche sur une chambre hydraulique de gonflement propre présentant une raideur de gonflement au moins aussi importante que celle de la chambre hydraulique de gonflement principale (la chambre hydraulique de gonflement principale est commune à toutes les colonnes).

L'invention vise à proposer un perfectionnement de cette cale.

A cet effet, l'invention a pour objet une cale amortissante hydraulique comportant :
- deux colonnes de fluide,
- chaque colonne de fluide ayant une extrémité mise en communication avec une chambre hydraulique de gonflement principale, dite de travail, cette chambre hydraulique de gonflement principale étant commune à toutes les colonnes de fluide,
- l'autre extrémité de chaque colonne de fluide étant mise en communication avec une chambre hydraulique de gonflement propre dite de compensation, spécifique à chaque colonne de fluide,
- une des chambres hydrauliques de gonflement propres ayant une raideur de gonflement supérieure ou égale à une raideur de gonflement de la chambre hydraulique de gonflement principale,
la cale amortissante hydraulique comporte en outre un dispositif de découplage aux basses fréquences placé en série avec une des colonnes de fluide reliant la chambre hydraulique de gonflement principale à sa chambre de gonflement propre.

L'invention permet ainsi d'adapter les caractéristiques de raideur de la cale en fonction de plusieurs gammes d'amplitudes/fréquences de fonctionnement. En effet, l'invention permet d'obtenir une cale présentant une raideur élevée en situation quasi-statique et à très basses fréquences, un amortissement élevé pour une ou plusieurs zones fréquentielles disjointes. Cet ensemble de caractéristiques lui confèrent un comportement vibratoire très favorable pour notamment améliorer le confort de véhicules.

Selon une réalisation, le dispositif de découplage aux basses fréquences est placé entre la chambre hydraulique de gonflement principale et une chambre hydraulique de gonflement propre ayant la plus faible raideur de gonflement.

Selon une réalisation, le dispositif de découplage aux basses fréquences est placé en amont ou en aval de la colonne de fluide débouchant dans la chambre hydraulique de gonflement propre de moindre raideur de gonflement.

Selon une réalisation, le dispositif de découplage aux basses fréquences est apte à agir à une fréquence comprise entre 0 Hz et 5 Hz.

Selon une réalisation, le dispositif de découplage aux basses fréquences comporte une membrane apte à évoluer dans une épaisseur limitée par deux grilles ou surfaces trouées.

Selon une réalisation, toutes les colonnes de fluide sont en série avec le dispositif de découplage aux basses fréquences, y compris des colonnes débouchant sur des chambres hydrauliques de gonflement propres ayant une raideur de gonflement supérieure à une raideur de gonflement de ladite chambre hydraulique de gonflement principale. Cela permet d'obtenir en situation statique ou quasi-statique une raideur d'ensemble de la cale plus élevée encore, donc assurant une suspension potentiellement meilleure du moteur du point de vue de ses débattements.

Selon une réalisation, la cale comprend un dispositif de découplage aux hautes fréquences interposé entre la chambre hydraulique de gonflement principale et la chambre hydraulique de gonflement propre de moindre raideur de gonflement, en parallèle de la colonne raccordant la chambre hydraulique de gonflement principale à cette chambre hydraulique de gonflement propre. Ceci apporte une raideur dynamique faible sur une plage de plus hautes fréquences et confère à la cale un comportement vibratoire encore plus favorable pour notamment améliorer le confort de véhicules

Cale amortissante selon la revendication précédente, caractérisé en ce que le dispositif de découplage aux hautes fréquences n'est raccordé directement à aucune colonne de fluide.

Selon une réalisation, le dispositif de découplage aux hautes fréquences est apte à agir à une fréquence comprise entre 100 Hz et 500 Hz.

Selon une réalisation, le dispositif de découplage aux hautes fréquences comporte une membrane apte à évoluer dans une épaisseur limitée par deux grilles ou surfaces trouées.

Selon une réalisation, les membranes des dispositifs de découplage sont formées à partir d'un même morceau d'élastomère continu ayant une épaisseur variable et/ou des possibilités de débattement différentes.

Selon une réalisation, tout ou partie des colonnes de fluide sont positionnées dans une zone extérieure de la chambre hydraulique de gonflement principale.

L'invention sera mieux comprise à la lecture de la description qui suit et à l'examen des figures qui l'accompagnent. Ces figures ne sont données qu'à titre illustratif mais nullement limitatif de l'invention.

La figure 1 est une représentation schématique de la cale amortissante hydraulique selon la présente invention comportant un premier dispositif de découplage aux hautes fréquences et un deuxième dispositif de découplage aux basses fréquences;

La figure 2 est une représentation schématique fonctionnelle de la cale amortissante hydraulique selon la présente invention.

Les éléments identiques, similaires, ou analogues conservent la même référence d'une figure à l'autre.

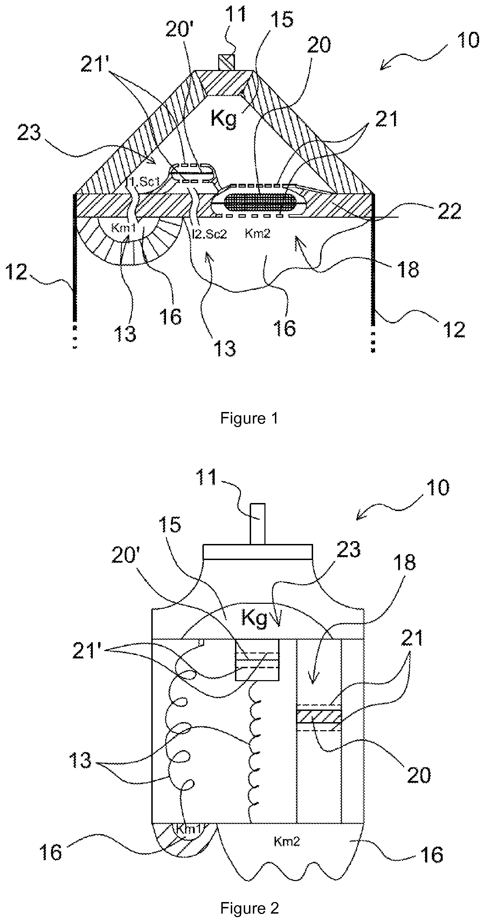

La figure 1 est une représentation schématique d'une cale 10 amortissante hydraulique multi-colonnes selon la présente invention. Cette cale 10 comporte deux zones d'interface référencées 11 et 12. Une des zones d'interface 11, 12 est reliée au moteur tandis que l'autre zone d'interface 11, 12 est reliée à la structure du véhicule.

La cale 10 comporte des colonnes 13 remplies de fluide ayant chacune une longueur li et une section Sci (i correspondant à l'indice de la colonne 13). Les colonnes de fluide 13 présentent une section Sci pouvant prendre toutes les formes jugées utiles, notamment une forme circulaire, carrée, ou rectangulaire. On a représenté deux colonnes de fluide 13 sur la figure, comportant respectivement une longueur l1 et l2 et une section Sc1 et Sc2. Plus généralement, le nombre de colonne 13 pourra être compris par exemple entre 2 et 50.

Chaque colonne de fluide 13 a une extrémité mise en communication avec une chambre 15 capable de gonflement hydraulique, appelée chambre hydraulique de gonflement principale 15 ou encore chambre hydraulique de travail. Cette chambre 15 est commune à toutes les colonnes de fluide 13.

L'autre extrémité de chaque colonne de fluide 13 est mise en communication avec une chambre 16 spécifique à chaque colonne 13. Ces deuxièmes chambres 16, dites chambres hydrauliques de gonflement propres 16 ou encore chambre de compensation, sont également capables de gonflement hydraulique. Il n'existe pas de liaison hydraulique directe entre ces chambres propres 16. On a représenté deux chambres propres 16 mais ce nombre pourra bien entendu être augmenté en correspondance avec le nombre de colonnes de fluide 13 de la cale 10.

On distingue une chambre de travail d'une chambre de compensation par le fait que lorsqu'on obstrue les endroits de la paroi de ces chambres fluides par où le fluide peut circuler en dehors de ces dites chambres, c'est-à-dire lorsqu'on obstrue ou bouche complètement les colonnes, et lorsque dans cette situation on applique un déplacement relatif entre les deux zones d'interface 11 et 12, c'est-à-dire lorsqu'on provoque un mouvement relatif entre les deux éléments de structure reliés aux zones d'interface 11 et 12, par exemple entre le moteur et la caisse du véhicule,

alors :
- la chambre de travail, ici la chambre de gonflement principale 15, travaille, c'est-à-dire que le fluide qu'elle contient fait se déformer sa paroi flexible sous l'action du déplacement relatif imposé aux interfaces 11 et 12; dit autrement on fait travailler la raideur de gonflement représentée par Kg sur notre figure 1 ;
- les chambres de compensation, ici les chambres de gonflement propres 16, ne travaillent pas, c'est-à-dire que le déplacement relatif imposé ne provoque pas de déformation de sa paroi flexible ; dit autrement on ne fait pas travailler les raideurs de gonflement représentées par Km1, Km2 sur notre figure 1.

Chaque chambre 15, 16, qui comporte une paroi déformable, est caractérisée classiquement par une raideur Kg, Kmi dite raideur de gonflement, exprimée en unité de force par unité de longueur, définie par rapport à une surface de référence commune fixée, appelée surface de piston. La raideur de gonflement de la chambre principale 15 est notée Kg. Les raideurs de gonflement des chambres propres 16 à chaque colonne de fluide 13 sont notées Kmi. Il est à noter que la cale 10 a un comportement passif, dans la mesure où elle ne met pas en œuvre une boucle de contrôle ou de rétroaction électro-mécanique.

En l'occurrence, la chambre propre 16 qui présente une paroi épaisse sur les figures a une raideur de gonflement Km1 comparable, autrement dit sensiblement égale, ou supérieure à la raideur de gonflement Kg de la chambre principale 15. Il est à noter que cette raideur Km1 peut, selon certains modes de réalisation, être très supérieure à la raideur Kg. Par ailleurs, la chambre propre 16 qui présente une paroi fine a une raideur de gonflement Km2 inférieure à la raideur de gonflement Kg de la chambre principale 15 et inférieure à la raideur Km1.

La cale 10 comporte en outre un premier dispositif de découplage 18 aux hautes fréquences correspondant à de faibles amplitudes de déplacement du fluide. Le dispositif de découplage 18 prend par exemple la forme d'une membrane 20 évoluant dans une épaisseur limitée par deux grilles trouées 21, comme cela est représenté sur la figure 1. Le dispositif de découplage 18 est par exemple implanté dans une paroi de séparation 22 entre la chambre principale 15 et la chambre propre 16 de raideur Km2.

Ainsi, lorsque les amplitudes de déplacement du fluide sont fortes à basses fréquences, la membrane 20 est plaquée contre les parois perforées 21 et limite les mouvements correspondants du fluide. Inversement, lorsque les amplitudes de déplacement sont faibles à hautes fréquences, la membrane 20 transmet librement et sans limitation les petits mouvements oscillants de fluide, de sorte que la raideur dynamique de la cale 10 est alors faible.

Le dispositif de découplage 18 agit typiquement entre 100 Hz et 500 Hz. En tout état de cause, la fréquence à partir de laquelle le premier dispositif 18 devient passant est supérieure à la plus haute fréquence de résonance des colonnes de fluide 13. Le dispositif de découplage 18 aux hautes fréquences n'est raccordé directement à aucune colonne 13 de fluide.

En outre, un deuxième dispositif de découplage 23 jouant pour les basses fréquences correspondant à de fortes amplitudes de fluide est placé en série de la colonne qui joint la chambre principale 15 et la chambre propre 16 ayant une raideur de gonflement Km2 inférieure à la raideur Kg de la chambre principale 15.

Le dispositif de découplage 23 est positionné sur la figure en amont de la colonne 13 débouchant dans la chambre propre 16 de raideur Km2 en étant implanté à proximité de l'embouchure d'entrée de ladite colonne 13. Toutefois, en variante, le dispositif de découplage 23 pourra être positionné en aval de la colonne 13 débouchant dans la chambre propre 16 de raideur Km2 en étant implanté à proximité de l'embouchure de sortie de ladite colonne 13. En variante, le dispositif de découplage 23 pourra être logé dans la colonne 13.

Dans le cas où la cale 10 comporte plusieurs chambres propres 16 de raideur inférieure à la raideur Kg de la chambre principale 15, on pourra prévoir un dispositif de découplage 23 associé à chacune des colonnes de fluide 13 correspondantes, ou bien encore un unique dispositif de découplage 23 commun aux colonnes concernées. En tout état de cause, on utilisera un dispositif 23 en série d'une colonne 13, entre la chambre principale 15 et la chambre propre 16 ayant la plus faible raideur de gonflement Km2.

Le dispositif de découplage 23 pourra être du même type technologique que le dispositif de découplage 18 en comportant une membrane 20' mobile entre deux grilles percées 21'. Le dispositif de découplage 23 pourra éventuellement être intégré dans le premier dispositif de découplage 18 en utilisant des membrane 20 et 20' continues consistant en un même morceau d'élastomère ayant une épaisseur variable et/ou ayant des possibilités de débattement différentes, par exemple entre des grilles différentes.

Dans un exemple de réalisation, le deuxième dispositif de découplage 23 agit à très basses fréquences, typiquement entre 0 Hz et 5 Hz. Ainsi, pour des fréquences comprises dans cette plage, la ou les colonnes de fluide 13 débouchant vers une chambre propre 16 de raideur de gonflement Km2 inférieure à la raideur Kg sont obturées par le dispositif de découplage 23 correspondant, ce qui a pour effet de produire une raideur statique élevée afin d'assurer un maintien efficace du moteur thermique par une forte raideur d'ensemble de la cale 10. Lorsque la fréquence de vibration sort de cette plage, chaque dispositif de découplage 23 autorise le passage du fluide dans la colonne 13 correspondante, ladite colonne 13 pouvant alors produire ses effets dynamiques, notamment ses effets d'amortissement. Ainsi, le deuxième dispositif de découplage 23 s'oppose, pour le domaine fréquentiel quasi-statique, à la circulation de fluide entre la chambre principale 15 et les chambres propres 16 de plus faible raideur Km2 de gonflement.

Plus fonctionnellement, un mode de réalisation peut être schématisé comme représenté sur la figure 2, où les hélices représentent les colonnes 13 inertielles de fluide. On a ainsi, dans une même cale 10 multi-fréquences, un premier dispositif 18 agissant en hautes fréquences qui découple la chambre principale 15 des colonnes inertielles de fluide 13 et un deuxième dispositif 23 agissant en basses fréquences qui découple la chambre principale 15 des chambres propres 16 de moindre raideur Km2 de gonflement.

L'invention permet ainsi d'adapter les caractéristiques de raideur de la cale 10 en fonction de plusieurs gammes d'amplitudes/fréquences de fonctionnement. En effet, l'invention permet d'obtenir une cale 10 présentant plusieurs zones fréquentielles disjointes pour lesquelles l'amortissement est élevé, une raideur statique élevée à très basses fréquences en situation statique et quasi-statique, et une raideur dynamique en plus hautes fréquences faible.

Il est évidemment possible d'ajouter plusieurs dispositifs 18, 23 de ce type et ainsi de particulariser encore leurs domaines d'action et leurs caractéristiques, en fonction de celles de la/les colonne(s) de fluide 13 qui sont mises en regard et des différentes zones de fréquences et/ou d'amplitudes que l'on souhaite traiter.

Des paramètres importants de mise au point sont (liste non exhaustive) : l'épaisseur et l'aire de la membrane 20, 20', typiquement réalisée en caoutchouc, son inertie mécanique, son inertie hydraulique équivalente, les jeux de débattement entre les grilles trouées 21, 21' et leur porosité vis-à-vis du fluide. Le système de découplage 23 agissant en très basses fréquences (quasi-statique) ne doit pas limiter les mouvements de fluide pour les intervalles de fréquence où les colonnes de fluide 13 agissent et génèrent de l'amortissement.

Selon une variante de réalisation, tout ou partie des colonnes de fluide 13 pourront être positionnées dans une zone extérieure de la chambre principale 15. Un des avantages de positionner une colonne 13 du côté extérieur de la chambre principale 15 est de pouvoir lui conférer une grande longueur li et/ou une grande aire de section Sci. Une des manières de réaliser en pratique des colonnes 13 de grande longueur est de les faire s'enrouler sur plusieurs tours si nécessaire.

Selon une autre variante encore de l'invention, toutes les colonnes de fluide 13 seront en série avec un dispositif de découplage du type 23, même si ces colonnes débouchent sur des chambres propres ayant une raideur de gonflement supérieure à Kg, permettant d'obtenir en situation statique ou quasi-statique une raideur d'ensemble de la cale 10 plus élevée encore, donc assurant une suspension potentiellement meilleure du moteur du point de vue de ses débattements.

## Revendications

1. Cale (10) amortissante hydraulique comportant :
- deux colonnes de fluide (13),
- chaque colonne de fluide (13) ayant une extrémité mise en communication avec une chambre hydraulique de gonflement principale (15), dite de travail, cette chambre hydraulique de gonflement principale (15) étant commune à toutes les colonnes de fluide (13),
- l'autre extrémité de chaque colonne de fluide (13) étant mise en communication avec une chambre hydraulique de gonflement propre (16) dite de compensation, spécifique à chaque colonne de fluide (13),
- une des chambres hydrauliques de gonflement propres (16) ayant une raideur de gonflement (Km1) supérieure ou égale à une raideur de gonflement (Kg) de la chambre hydraulique de gonflement principale (15),
**caractérisée en ce que** ladite cale (10) amortissante hydraulique comporte en outre:
- un dispositif de découplage (23) aux basses fréquences placé en série avec une des colonnes de fluide (13) reliant la chambre hydraulique de gonflement principale (15) à sa chambre de gonflement propre (16).

2. Cale amortissante selon la revendication 1, **caractérisé en ce que** le dispositif de découplage (23) aux basses fréquences est placé entre la chambre hydraulique de gonflement principale (15) et une chambre hydraulique de gonflement propre (16) ayant la plus faible raideur de gonflement (Km2).

3. Cale amortissante selon la revendication 1 ou 2, **caractérisée en ce que** le dispositif de découplage (23) aux basses fréquences est placé en amont ou en aval de la colonne de fluide (13) débouchant dans la chambre hydraulique de gonflement propre (16) de moindre raideur de gonflement (Km2).

4. Cale amortissante selon l'une quelconque des revendications 1 à 3, **caractérisée en ce que** le dispositif de découplage (23) aux basses fréquences est apte à agir à une fréquence comprise entre 0 Hz et 5 Hz.

5. Cale amortissante selon l'une quelconque des revendications 1 à 4, **caractérisée en ce que** le dispositif de découplage (23) aux basses fréquences comporte une membrane (20') apte à évoluer dans une épaisseur limitée par deux grilles ou surfaces trouées (21').

6. Cale amortissante selon l'une quelconque des revendications 1 à 5, **caractérisée en ce que** toutes les colonnes de fluide (13) sont en série avec le dispositif de découplage (23) aux basses fréquences, y compris des colonnes (13) débouchant sur des chambres hydrauliques de gonflement propres (16) ayant une raideur de gonflement (Km1) supérieure à une raideur de gonflement (Kg) de ladite chambre hydraulique de gonflement principale (15).

7. Cale amortissante selon l'une quelconque des revendications 1 à 6, **caractérisée en ce qu'**elle comprend un dispositif de découplage (18) aux hautes fréquences interposé entre la chambre hydraulique de gonflement principale (15) et la chambre hydraulique de gonflement propre (16) de moindre raideur de gonflement (Km2), en parallèle de la colonne raccordant la chambre hydraulique de gonflement principale (15) à cette chambre hydraulique de gonflement propre (16).

8. Cale amortissante selon la revendication précédente, **caractérisé en ce que** le dispositif de découplage (18) aux hautes fréquences n'est raccordé directement à aucune colonne de fluide.

9. Cale amortissante selon la revendication 7 ou la revendication 8, **caractérisée en ce que** le dispositif de découplage (18) aux hautes fréquences est apte à agir à une fréquence comprise entre 100 Hz et 500 Hz.

10. Cale amortissante selon l'une quelconque des revendications 7 à 9, **caractérisée en ce que** le dispositif de découplage (18) aux hautes fréquences comporte une membrane (20) apte à évoluer dans une épaisseur limitée par deux grilles ou surfaces trouées (21).

11. Cale amortissante selon la revendication 10 et la revendication 5, **caractérisée en ce que** les membranes (20, 20') des dispositifs de découplage (18, 23) sont formées à partir d'un même morceau d'élastomère continu ayant une épaisseur variable et/ou des possibilités de débattement différentes.

12. Cale amortissante selon l'une quelconque des revendications précédentes, **caractérisée en ce que** tout ou partie des colonnes de fluide (13) sont positionnées dans une zone extérieure de la chambre hydraulique de gonflement principale (15).

## Patentansprüche

1. Hydraulischer Stoßdämpfer bestehend aus:
- zwei Flüssigkeitssäulen (13),
- Jede Flüssigkeitssäule (13) hat ein Ende, das in Verbindung mit einer hydraulischen Hauptfüllkammer (15) steht, die als Arbeitskammer bezeichnet wird, wobei diese hydraulische Hauptfüllkammer (15) allen Flüssigkeitssäulen (13) gemeinsam ist.
- das andere Ende jeder Flüssigkeitssäule (13) wird in Verbindung mit einer sauberen hydraulischen Aufblaskammer (16) gebracht, die als Kompensation bezeichnet wird und für jede Flüssigkeitssäule (13) spezifisch ist;
- eine der eigenen hydraulischen Aufblaskammern (16) mit einer Quellsteifigkeit (km1), die größer oder gleich einer Quellsteifigkeit (kg) der hydraulischen Hauptfüllkammer (15) ist; **dadurch gekennzeichnet, dass** der hydraulische Dämpfungskeil (10) ferner umfasst:
- eine Entkopplungsvorrichtung (23) bei niedrigen Frequenzen, die in Reihe mit einer der Flüssigkeitssäulen (13) geschaltet ist, die die hydraulische Hauptfüllkammer (15) mit ihrer eigenen Aufblaskammer (16) verbindet.

2. Stoßdämpfer nach Anspruch 1, **dadurch gekennzeichnet, dass** die Entkopplungsvorrichtung (23) bei niedrigen Frequenzen zwischen der hydraulischen Hauptfüllkammer (15) und einer sauberen hydraulischen Aufblaskammer (16) mit der geringsten Steifigkeit angeordnet ist Schwellung (km2).

3. Stoßdämpfer nach Anspruch 1 oder 2, **dadurch gekennzeichnet, dass** die Entkopplungsvorrichtung (23) bei niedrigen Frequenzen stromaufwärts oder stromabwärts der Flüssigkeitssäule (13) angeordnet ist, die in die saubere hydraulische Aufblaskammer (16) mündet geringere Quellsteifigkeit (Km2).

4. Stoßdämpfer nach einem der Ansprüche 1 bis 3, **dadurch gekennzeichnet, dass** die Entkopplungsvorrichtung (23) bei niedrigen Frequenzen bei einer Frequenz zwischen 0 Hz und 5 Hz wirken kann.

5. Stoßdämpfer nach einem der Ansprüche 1 bis 4, **dadurch gekennzeichnet, dass** die Entkopplungsvorrichtung (23) bei niedrigen Frequenzen eine Membran (20') umfasst, die in einer Dicke arbeiten kann, die durch zwei Gitter oder perforierte Oberflächen begrenzt ist (21').

6. Stoßdämpfer nach einem der Ansprüche 1 bis 5, **dadurch gekennzeichnet, dass** alle Fluidsäulen (13) bei niedrigen Frequenzen, einschließlich der sich öffnenden Säulen (13), mit der Entkopplungsvorrichtung (23) in Reihe geschaltet sind bei sauberen hydraulischen Aufblaskammern (16) mit einer Aufblassteifigkeit (Km1), die größer als eine Aufblassteifigkeit (Kg) der hydraulischen Hauptaufblaskammer (15) ist.

7. Stoßdämpfer nach einem der Ansprüche 1 bis 6, **dadurch gekennzeichnet, dass** er eine Entkopplungsvorrichtung (18) mit hohen Frequenzen umfasst, die zwischen der hydraulischen Hauptfüllkammer (15) und der hydraulischen eigenen Aufblaskammer angeordnet sind (16) mit geringerer Aufblassteifigkeit (km2) parallel zu der Säule, die die hydraulische Hauptaufblaskammer (15) mit dieser sauberen hydraulischen Aufblaskammer (16) verbindet.

8. Stoßdämpfer nach dem vorhergehenden Anspruch, **dadurch gekennzeichnet, dass** die Entkopplungsvorrichtung (18) bei hohen Frequenzen nicht direkt mit einer Flüssigkeitssäule verbunden ist.

9. Stoßdämpfer nach Anspruch 7 oder Anspruch 8, **dadurch gekennzeichnet, dass** die Entkopplungsvorrichtung (18) bei hohen Frequenzen bei einer Frequenz zwischen 100 Hz und 500 Hz wirken kann.

10. Stoßdämpfer nach einem der Ansprüche 7 bis 9, **dadurch gekennzeichnet, dass** die Entkopplungsvorrichtung (18) bei hohen Frequenzen eine Membran (20) umfasst, die in einer Dicke arbeiten kann, die durch zwei Gitter oder perforierte Oberflächen (21) begrenzt ist).

11. Stoßdämpfer nach Anspruch 10 und Anspruch 5, **dadurch gekennzeichnet, dass** die Membranen (20, 20 ') der Entkopplungsvorrichtungen (18, 23) aus dem gleichen Stück kontinuierlichen Elastomers mit einer Dicke gebildet sind variable und / oder unterschiedliche Reisemöglichkeiten.

12. Stoßdämpfer nach einem der vorhergehenden Ansprüche, **dadurch gekennzeichnet, dass** alle oder ein Teil der Fluidsäulen (13) in einer Außenzone der hydraulischen Hauptfüllkammer (15) angeordnet sind.

## Claims

1. Hydraulic damping wedge (10) comprising:
- two columns of fluid (13),
- each fluid column (13) having one end placed in communication with a main hydraulic inflation chamber (15), known as the working chamber, this main hydraulic inflation chamber (15) being common to all the fluid columns (13),
- the other end of each column of fluid (13) being placed in communication with a clean hydraulic inflation chamber (16) called compensation, specific to each column of fluid (13),
- one of the own hydraulic inflation chambers (16) having a inflation stiffness (Km1) greater than or equal to a inflation stiffness (Kg) of the main hydraulic inflation chamber (15),
**characterized in that** said hydraulic damping wedge (10) further comprises:
- a decoupling device (23) at low frequencies placed in series with one of the columns of fluid (13) connecting the main hydraulic inflation chamber (15) to its own inflation chamber (16).

2. Damping wedge according to claim 1, **characterized in that** the decoupling device (23) at low frequencies is placed between the main hydraulic inflation chamber (15) and a clean hydraulic inflation chamber (16) having the lowest stiffness swelling (Km2).

3. Damping wedge according to claim 1 or 2, **characterized in that** the decoupling device (23) at low frequencies is placed upstream or downstream of the column of fluid (13) opening into the clean hydraulic inflation chamber (16) less swelling stiffness (Km2).

4. Damping wedge according to any one of claims 1 to 3, **characterized in that** the decoupling device (23) at low frequencies is capable of acting at a frequency between 0 Hz and 5 Hz.

5. Damping wedge according to any one of claims 1 to 4, **characterized in that** the decoupling device (23) at low frequencies comprises a membrane (20') capable of operating in a thickness limited by two grids or perforated surfaces (21').

6. Damping wedge according to any one of claims 1 to 5, **characterized in that** all the fluid columns (13) are in series with the decoupling device (23) at low frequencies, including columns (13) opening out on clean hydraulic inflation chambers (16) having a inflation stiffness (Km1) greater than an inflation stiffness (Kg) of said main hydraulic inflation chamber (15).

7. Damping wedge according to any one of claims 1 to 6, **characterized in that** it comprises a decoupling device (18) at high frequencies interposed between the main hydraulic inflation chamber (15) and the hydraulic own inflation chamber (16) of lower inflation stiffness (Km2), in parallel with the column connecting the main hydraulic inflation chamber (15) to this clean hydraulic inflation chamber (16).

8. Damping wedge according to the preceding claim, **characterized in that** the decoupling device (18) at high frequencies is not directly connected to any column of fluid.

9. Damping wedge according to claim 7 or claim 8, **characterized in that** the decoupling device (18) at high frequencies is capable of acting at a frequency between 100 Hz and 500 Hz.

10. Damping wedge according to any one of claims 7 to 9, **characterized in that** the decoupling device (18) at high frequencies comprises a membrane (20) capable of operating in a thickness limited by two grids or perforated surfaces (21).

11. Damping wedge according to claim 10 and claim 5, **characterized in that** the membranes (20, 20') of the decoupling devices (18, 23) are formed from the same piece of continuous elastomer having a thickness variable and / or different travel possibilities.

12. Damping wedge according to any one of the preceding claims, **characterized in that** all or part of the fluid columns (13) are positioned in an external zone of the main hydraulic inflation chamber (15).
